(19) Europäisches Patentamt
European Patent Office
Office européen des brevets

(11) **EP 3 653 854 A1**

(12) **EUROPEAN PATENT APPLICATION**

(43) Date of publication:
**20.05.2020 Bulletin 2020/21**

(51) Int Cl.:
*F01N 11/00* *(2006.01)*    *F01N 3/021* *(2006.01)*

(21) Application number: **18206294.3**

(22) Date of filing: **14.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ford Otomotiv Sanayi Anonim Sirketi 34885 Istanbul (TR)**

(72) Inventors:
• **Aran, Volkan**
  **Maltepe - Istanbul (TR)**
• **Ariel, Burak**
  **Kurtköy,Pendik/Istanbul (TR)**
• **Emekli, Engin**
  **Maltepe-Istanbul (TR)**
• **Özgür, Tuncer**
  **Maltepe - Istanbul (TR)**

(74) Representative: **Illing, Rolf**
  **Ford-Werke GmbH**
  **Patentabteilung NH-364**
  **Henry-Ford-Straße 1**
  **50735 Köln (DE)**

(54) **DIESEL PARTICULATE FILTER MONITORING**

(57)    A method for monitoring a diesel particulate filter (45) positioned downstream of an engine (44) with respect to an exhaust gas flow direction is described. The method comprises the following steps:
- determining and logging at least one physical parameter which characterises the thermodynamic properties of the exhaust gas (6),
- estimating at least one parameter characterising the diesel particulate filter based on the at least one physical parameter using a recursive estimation logic (11), when a trigger condition (9) and at least one activation condition (8) are met,
- counting the total estimated parameter data points and when the number of data points reaches a predetermined limit, classifying (13) the diesel particulate filter based on the estimated at least one parameter using a support vector machine logic.

Fig. 2

Printed by Jouve, 75001 PARIS (FR)

EP 3 653 854 A1

## Description

The present invention relates to a method and a device for monitoring a diesel particulate filter (abbreviated as DPF). Moreover, the invention relates to an exhaust aftertreatment device and to a vehicle, especially an automobile. The invention further relates to a computer program product and a computer-readable storage medium.

Diesel particulate filters (DPF) are main soot reduction devices of modern diesel engines. Their functionality should be online monitored on the vehicles according to emission regulations and company strategy. A broken DPF is defined such that soot mass passes through it under certain conditions. This situation should be avoided and recognised as soon as possible to replace or repair the filter. Typically, an engine electronic control unit (ECU) runs certain routines for accomplishing this monitoring task. Model based routines are for example described in the document DE 60 2004 023 443 T2.

A diesel particulate filter consists of porous walled corridors and non-permeable plugs at the downstream ends of the corridors. The diesel particulate filter blocks soot particles in its porous walls. The filter functionality will be deteriorated if any part of the plugs are removed due to a crack or another reason. If plugs are cracked or the DPF is removed, unhealthy levels of particulate matter may be emitted to the environment.

Pressure based monitoring methods have difficulties with robustness and precision. Since real world vehicle engine monitoring conditions cannot be stable and controlled, comparison is practically being done under deviated boundary conditions. Therefore, the pressure difference between "intact" and "broken" DPF should be high in order to prevent misdetections. This is the main limiting factor of these type of methods. Although there are other methods available in the literature, practical applicability of the alternative methods are not validated or known. Lower soot limits resulted in a higher precision detection need. Since state of art flow and pressure based monitoring methods are not accurate enough, particulate matter (PM) sensors are introduced. The sensor and all related equipment are only used for DPF monitoring tasks and pressure and temperature sensors of the previous approach are still being used due to their utilization in the other engine and aftertreatment control tasks.

As already mentioned, PM sensors are only used for DPF monitoring purposes. PM sensors are typically placed downstream of the DPF. Soot mass passed through the DPF is accumulated on the sensor and the sensor element output current changes with the accumulated soot. Engine out soot model and PM sensor readings are compared for intact and broken DPFs for certain boundary conditions. A PM sensor reading threshold is determined regarding the mentioned conditions for the detection. This method adds significant cost to the system.

It is therefore an objective of the present invention to provide an improved method and a device for monitoring a diesel particulate filter, especially with improved accuracy and without the need for a particulate matter sensor.

This objective is solved by a method for monitoring a diesel particulate filter as claimed in claim 1, a device for monitoring a diesel particulate filter as claimed in claim 11, an exhaust aftertreatment device as claimed in claim 13, a vehicle as claimed in claim 14, a computer program product as claimed in claim 15 and a computer-readable storage medium as claimed in claim 16. The depending claims define further developments of the present invention.

The inventive method for monitoring a diesel particulate filter positioned downstream of an engine with respect to an exhaust gas flow direction comprises the following steps: determining and logging at least one physical parameter which characterises the thermodynamic properties of the exhaust gas; estimating at least one parameter characterising the diesel particulate filter based on the at least one physical parameter using a recursive estimation logic, when the trigger conditions and at least one activation condition, for example a static activation condition, are met; counting the total estimated parameter data points and when the number of data points reaches a predetermined limit, classifying the diesel particulate filter based on the estimated at least one parameter using a support vector machine logic. The inventive method has the advantage that no particulate matter filter is needed for monitoring and the accuracy is improved. Preferably the logged physical parameter signals are filtered.

In an advantageous variant the step of estimating at least one parameter characterising the diesel particulate filter comprises estimating the permeability of the diesel particulate filter, for example using a measured or calculated density and/or viscosity of the exhaust gas flow. The permeability is a reliable indicator of the state of the diesel particulate filter.

In a further variant a recursive estimation logic comprising a static Kalman filter algorithm and/or a recursive least squares algorithm are used. This improves the accuracy of the estimation.

The step of estimating at least one parameter characterising the diesel particulate filter may comprise determining the average pressure difference between an upstream side and a downstream side of the diesel particulate filter and/or a differential pressure measurement bias across a diesel particulate filter wall and/or a diesel particulate filter soot load, for example an averaged and/or modelled filter soot load. The diesel particulate filter pressure difference can be determined by measuring using a sensor or by calculating based on a measured inlet pressure and an outlet pressure model signal.

A bin logic may be used, especially for counting the total estimated parameter data points. In the context of the bin logic flow rate based bins may advantageously be used as trigger conditions.

In a preferred variant the method comprises the steps of logging input values for a current time stamp (t); filtering the raw input values; if a number of predetermined activation conditions are not met, waiting for a next clock trigger (t=t+$\Delta$) and continuing with logging input values; if the number of predetermined activation conditions are met, checking the distribution of the filtered values using a bin logic; if there is no associated bin or the active bin is full, then waiting for a next clock trigger (t=t+$\Delta$) and continuing with logging input values; if the active bin is not full, then estimating, especially calculating, at least one parameter characterising the diesel particulate filter, waiting for a next clock trigger (t=t+$\Delta$) and continuing with logging input values; and if all bins are full, then evaluating the last estimated, especially calculated, parameters characterising the diesel particulate filter using a classifier; classifying the diesel particulate filter based on the classified parameters; and outputting a signal comprising the result of the classification.

Moreover, the inventive method may comprise measuring the mass air flow by a sensor positioned at an airflow inlet pipe of the engine, reading the fuel mass flow, especially the fuel quantity, from calibrated tables, for example of an ECU, and calculating the total exhaust flow by summation of the measured mass air flow and the fuel mass flow.

The step of determining at least one physical parameter which characterises the thermodynamic properties of the exhaust gas can comprise measuring the inlet temperature and the exit or outlet temperature, for example by means of temperature sensors, and the exhaust mass flow, and estimating the temperature of the diesel particulate filter based on the inlet temperature, the outlet temperature and the exhaust mass flow using a model.

At least one predetermined activation condition may comprise an upper limit and/or a lower limit of an engine operation mode and/or an upper limit and/or a lower limit of a volumetric flow through the diesel particulate filter and/or an upper limit and/or a lower limit of a diesel particulate filter differential pressure and/or an upper limit and/or a lower limit of a diesel particulate filter temperature and/or an upper limit and/or a lower limit of an estimated soot load.

The inventive device for monitoring a diesel particulate filter is adapted to execute an inventive method for monitoring a diesel particulate filter as previously described. The inventive device may comprise at least one means for determining and logging at least one physical parameter, which characterises the thermodynamic properties of the exhaust gas, and an evaluation unit. The evaluation unit is adapted for estimating at least one parameter characterising the diesel particulate filter based on the at least one physical parameter using a recursive estimation logic, when the trigger conditions and at least one activation condition are met. The evaluation unit is further adapted for counting the total estimated parameter data points and when the number of data points reaches a predetermined limit, classifying the diesel particulate filter based on the estimated at least one parameter using a support vector machine logic. The inventive device for monitoring a diesel particulate filter has the same advantages as the inventive method.

The inventive exhaust aftertreatment device comprises a diesel particulate filter and an inventive device for monitoring a diesel particulate filter as previously described. The inventive vehicle comprises a diesel engine and an inventive exhaust aftertreatment device. The vehicle may be an automobile or a ship. The automobile may be a car, a truck, a bus or a motorcycle. The inventive exhaust aftertreatment device and the inventive vehicle have the same advantages as the inventive method and device for monitoring a diesel particulate filter.

The inventive computer program product comprises instructions which, when the program is executed by a computer, cause the computer to carry out an inventive method. The inventive computer-readable storage medium comprises instructions which, when the program is executed by a computer, cause the computer to carry out an inventive method. The inventive computer program product and computer-readable storage medium have the same advantages as the inventive method.

The present invention utilizes for instance pressure, temperature and flow information but not a PM sensor. Therefore, additional cost and complexity of the PM sensor will be avoided. Previous methods are using the pressure value directly. The proposed method can estimate the permeability of the DPF under certain conditions. Average pressure, estimated differential pressure measurement bias and modelled DPF soot load can be calculated under a triggered subsystem. Trigger conditions are preferably flowrate based bins and other static activation conditions may be used for general activation. When bin logic and activation are permitted, filter characteristic values are estimated via recursive estimation logic. For example, static Kalman filter can be used for this case, but recursive least squares can be used as well. The total data points are counted and when a pre-calibrated limit is reached, estimated parameters are used for classification of the DPF. The classification is done via a support vector machine logic. This method improves accuracy of pressure based monitoring substantially, need for the PM sensor diminishes.

Compared to known methods the method of the present invention has the following advantages: The proposed method guarantees that same number of input data in specified value ranges are used for each drive cycle. Instead of using pressure values for distinction, estimated parameters like permeability, inertial permeability, mean pressure value and mean soot load can be calculated as feature vector elements for machine learning classification. Additional costs and complexity due to a PM sensor are saved.

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.

Fig. 1  schematically illustrates the basic concept of the present invention.

Fig. 2  schematically shows an example of an inventive method for monitoring a diesel particulate filter as flowchart.

Fig. 3  schematically shows a flowchart of an example of a subroutine of step 9 of Figure 2.

Fig. 4  schematically shows an inventive device for monitoring a diesel particulate filter.

Fig. 5  schematically shows an inventive vehicle.

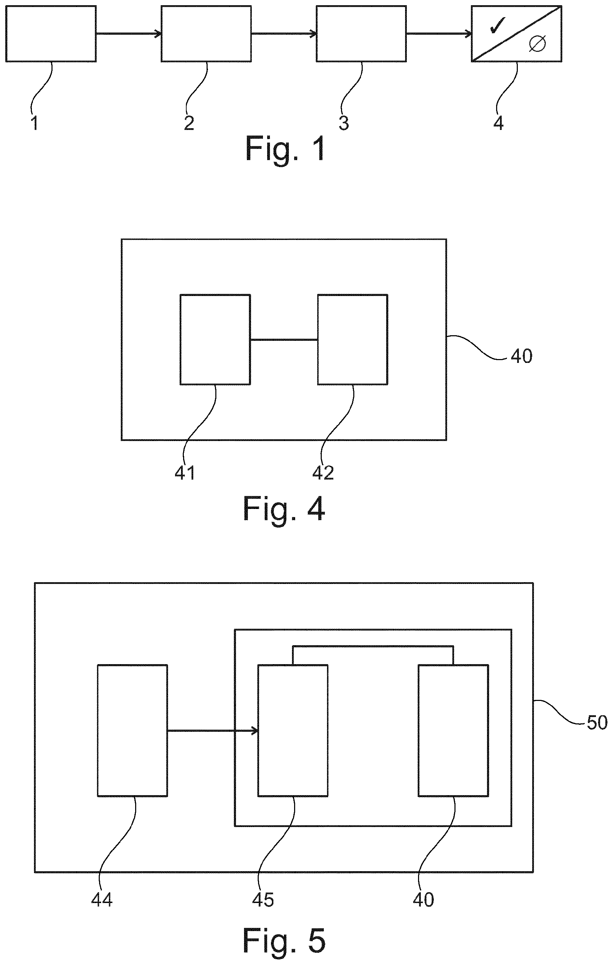

Figure 1 schematically illustrates the basic concept of the present invention. Input data from a vehicle 1 comprising physical parameters, like for example exhaust gas pressure upstream and/or downstream of a diesel particulate matter filter, exhaust gas temperature upstream and/or downstream of a diesel particulate matter filter and exhaust gas mass flow, are used for estimating physical parameters and feature extraction of a diesel particulate matter filter by means of an evaluation unit 2. The estimated parameters and/or extracted features are classified by means of a classification unit 3. The result of the classification is outputted in form of output signals 4. The steps of evaluation and classification can be realises in one single evaluation unit.

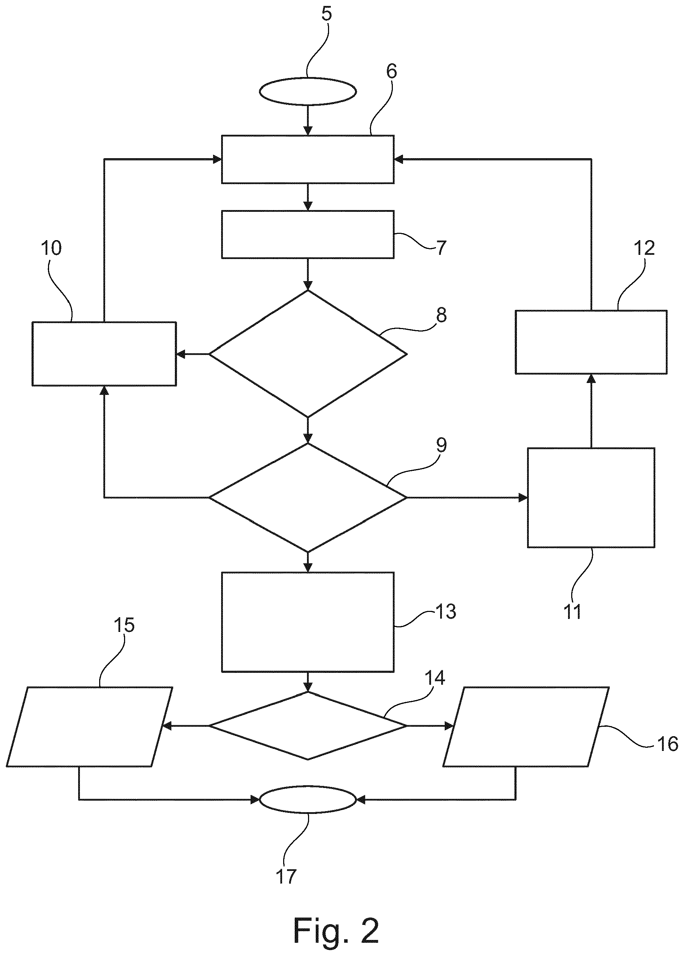

The proposed algorithm comprises four main sub functions, namely, Activation, Data distribution check, Estimation and Evaluation. Detailed description of each main function is presented below. Figure 2 schematically shows an example of an inventive method for monitoring a diesel particulate filter as general flowchart.

The start of the routine is indicated by reference number 5. In step 6 input values for a current time stamp t are logged. The input values can be exhaust gas pressure signals from pressure sensors upstream and downstream of the diesel particulate matter filter, exhaust gas temperature signals from temperature sensors, exhaust gas mass flow signals, air mass flow signals, injected fuel quantity or other thermodynamic properties of the exhaust gas.

For example, the mass air flow can measured by a sensor placed at an engine airflow inlet pipe. The injected fuel quantity can be red from calibrated tables of an ECU. The total exhaust flow can be calculated by summation of the mass air flow and the mass flow of the injected fuel. The DPF temperature can be estimated with a model which utilizes inlet and outlet temperature sensor information besides exhaust mass flow. Based on the application the DPF pressure difference can be measured with a sensor or calculated with an inlet pressure sensor and an outlet pressure model signal.

The mentioned exhaust thermodynamic properties are taken as input in step 6 and can be filtered in step 7. The filtered signals or data are sent to Activation 8 and Data distribution check 9 steps. The Activation function 8 checks whether the current thermodynamic state is in the predetermined interval or not. This check is used for eliminating extreme conditions for monitoring. The monitoring logic may be deactivated during special events such as regeneration of DPF. If not all predetermined activation conditions are met, then it is waited for a next clock trigger t=t+Δ in step 10 and the routine is continued with step 6. If all predetermined activation conditions are met, then the routine is continued with step 9, which is a Data distribution check.

The predetermined activation conditions in step 8 may use an engine operation mode and/or a volumetric flow through the DPF and/or a DPF differential pressure and/or a DPF temperature and/or an estimated soot load as inputs of a function. This function may use calibratable upper and/or lower limits for all physical values and certain engine operation modes, which are allowed. If the physical values are in the limit range and current engine operation mode is allowed, then the rest of the functions are activated.

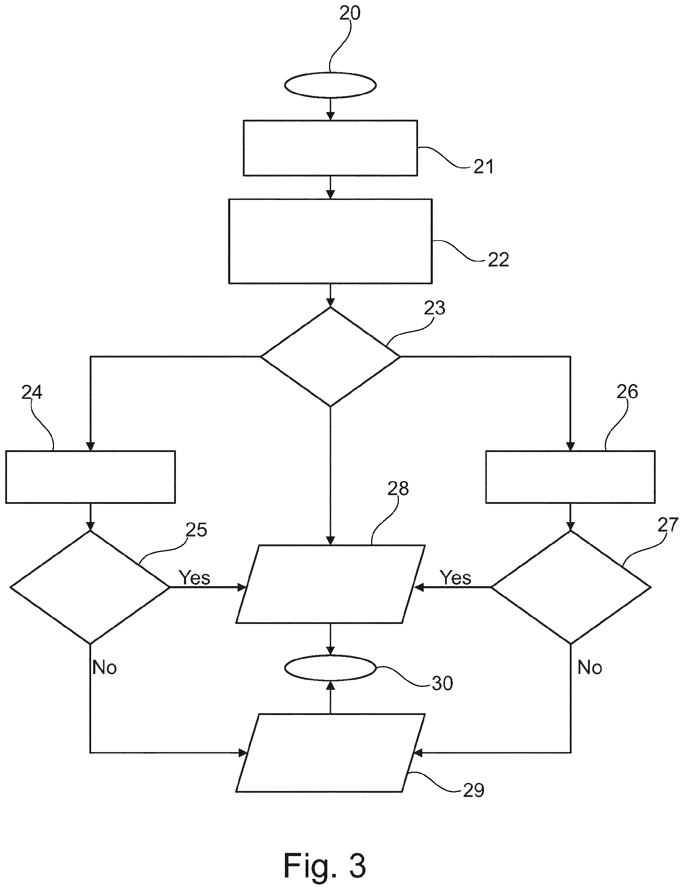

The following step 9 is a Data distribution check. This is realised by a bin logic, which will be described in detail in conjunction with Figure 3. If there is no associated bin or the active bin is full, then the routine is continued with step 10. If the active bin is not full, then DPF parameters are estimated, for instance calculated, in step 11. Thereafter it is waited for a next clock trigger t=t+Δ in step 12 and the routine is continued with step 6. If all bins are full as result of step 9, then the routine is continued with evaluating the last estimated, for example last calculated, DPF parameters by means of a classifier in step 13.

In step 11 the following calculations can be done only for "active bin is not full" state. DPF pressure drop is known to be dominantly related with the wall flow pressure drop when a certain amount of soot is built up on it. The well-known Darcy-Forcheimer relation can be used for the DPF pressure drop model. A static Kalman filter with three states can be used. Input states may be differential pressure, volumetric flow square multiplied with half of the flow density, volumetric flow multiplied with Sutherland's formula calculated flow viscosity. Using these three inputs static differential pressure measurement bias, inverse of permeability and inverse of dynamic permeability are recursively calculated under triggered subsystem. Also sample average of soot load and pressure difference across the DPF can be calculated. These five outputs may be used in the following evaluation step 13. Typical estimation parameters are described but another DPF property estimation with evaluation logic can be used.

The following formula is preferably be used for calculating the pressure drop on the DPF $\Delta P_{DPF}$:

$$\Delta P_{DPF} \cong \frac{\mu(P,T)}{k} \dot{V} + \frac{\rho(P,T)}{k_1} \dot{V}^2 + c \quad ,$$

where $\mu$ is the viscosity, $\rho$ the density, k the permeability, $k_1$ the inertial permeability, V dot the volumetric flow rate, T the temperature, P the pressure and c the static differential pressure measurement bias. The formula can also be used to estimate other parameters of the formula, for example the static differential pressure measurement bias c.

The subroutine of step 9, namely data distribution check, guarantees a certain distribution of the data in terms of the defined parameters. Details are depicted in Figure 3. When activation conditions are met instantaneous volumetric flow is checked for pre-calibrated bins. There is a certain number of bins which may represent respective volumetric flow intervals but not limited to it. Intervals can be defined as other inputs or their algebraic combinations as well. Each bin has a pre-calibrated capacity. If current volumetric flow is between thresholds of any bin, then a bin counter is increased. If total count is under the predefined limit, then an estimation function is activated. If current volumetric flow is not in the defined intervals or the respective bin is full, then the estimation is deactivated. If all bins are full, then the monitoring is complete and evaluation can be done with the estimated parameters (see step 13).

An example for a bin logic of step 9 is shown in Figure 3 in form of a flowchart. The data distribution check guarantees the same volumetric flow distribution for each monitoring event. This logic activates or deactivates the estimator calculation. Thus each complete parameter estimation calculation is subjected to the same number of data in certain calibrated intervals. The estimation function uses for instance a calculated density and viscosity of the exhaust gas flow and estimates permeability values of the DPF. Besides permeability average pressure, pressure difference differential pressure measurement bias and average estimated soot load can be calculated under a triggered subsystem.

If the monitoring data is complete, the estimated values are used for classification of DPF as broken or intact in step 13 of Figure 2. This classification is implemented via support vector machine logic. Specifically polynomial kernels may be used for online computation efficiency. The evaluation of the calculated parameters results in a precise classification of the DPF. This logic does not require a PM sensor and its monitoring accuracy is capable of detecting state of art threshold DPF parts.

The Evaluation step 13 is triggered when monitoring complete signal is sent from Data distribution check function of step 9. This step realizes a machine learning classification method. The step 13 includes a support vector machine. Certain type of polynomials can be numerically summed. If the result of the sum is positive, then DPF has a certain state, for example "broken" or "intact", and vice versa. Support vector machines and parameters are found offline with DPF calibration procedure which does not require an additional testing as previous methods.

Inputs and outputs of the described algorithm can be a calculated value of the volumetric exhaust gas flow through the DPF, differential pressure across the DPF from either a sensor or calculation, simulated DPF temperature, engine operation mode, absolute value of the static gas pressure on the DPF, DPF soot load value based on engine out soot load models and regeneration models. The first output of the algorithm is monitoring completion status. This gives whether the required data are collected in the current drive cycle or not. The status output of step 14 indicates that the monitoring is complete or not and whether the DPF is intact 16 or not 15. The end of the routine of Figure 2 is indicated by reference numeral 17.

The procedure shown in Figure 3 starts 20 with logging filtered current inputs and loading last stored bin accumulator values in step 21. In step 22 the relevant data bin is determined. In step 23 the active bin is selected. In step 24 for example the data bin number 1 is selected and the bin accumulator is increased ($Bin_{1Acc}=Bin_{1Acc}+1$). In step 26 for example the data bin number 2 is selected and the bin accumulator is increased ($Bin_{2Acc}=Bin_{2Acc}+1$). In step 25 it is checked whether the bin accumulator of bin number 1 increases a predetermined threshold ($Bin_{1Acc}>threshold_1$). If yes, then in step 28 it is outputted that the active bin is full or that there is no associated bin. If not, then in step 29 it is outputted that the active bin is not full. In step 27 it is checked whether the bin accumulator of bin number 2 increases a predetermined threshold ($Bin_{2Acc}>threshold_2$). If yes, then in step 28 it is outputted that the active bin is full or that there is no associated bin. If not, then in step 29 it is outputted that the active bin is not full. The end of the subroutine is indicated by reference numeral 30.

Figure 4 schematically shows an inventive device 40 for monitoring a diesel particulate filter. The device 40 comprises a means 41 for determining and logging at least one physical parameter which characterises the thermodynamic properties of the exhaust gas, and an evaluation unit 42. The evaluation unit 42 is adapted for estimating at least one parameter characterising the diesel particulate filter based on the at least one physical parameter using a recursive estimation logic, when the trigger conditions and at least one, for example static, activation condition are met. The evaluation unit 42 is further adapted for counting the total estimated parameter data points and when the number of data points reaches a predetermined limit, classifying the diesel particulate filter based on the estimated at least one parameter using a support vector machine logic. The device 40 is adapted to execute a method for monitoring a diesel particulate filter as described above.

Figure 5 schematically shows an inventive vehicle 50. The vehicle 50 comprises a diesel engine 44 and an exhaust aftertreatment device 43. The exhaust aftertreatment device 43 comprises a diesel particulate filter 45 positioned downstream of the engine 44 with respect to the exhaust gas flow and a device for monitoring a diesel particulate filter 40. The vehicle 50 may be an automobile, a truck, a bus, a motorcycle or a ship.

Reference listing

| | |
|---|---|
| 1 | vehicle input signals |
| 2 | evaluation unit |
| 3 | classification unit |
| 4 | output signals |
| 5 | start |
| 6 | log input signals for current time stamp t |
| 7 | filter required raw input signals |
| 8 | check activation conditions |
| 9 | check data distribution |
| 10 | wait for next clock trigger $t=t+\Delta$ |
| 11 | estimate DPF parameters |
| 12 | wait for next clock trigger $t=t+\Delta$ |
| 13 | evaluate last estimated DPF parameters with classifier |
| 14 | check classifier output |
| 15 | monitoring complete, output "broken DPF" signal |
| 16 | monitoring complete, output "intact DPF" signal |
| 17 | end |
| 20 | start |
| 21 | logging filtered current inputs and loading las stored bin accumulator values |
| 22 | determine the relevant data bin |
| 23 | select the active bin |
| 24 | increase bin accumulator $Bin_{1Acc}=Bin_{1Acc}+1$ |
| 25 | $Bin_{1Acc}>threshold_1$ |
| 26 | increase bin accumulator $Bin_{2Acc}=Bin_{2Acc}+1$ |
| 27 | $Bin_{2Acc}>threshold_2$ |
| 28 | active bin is full or there is no associated bin |
| 29 | active bin is not full |
| 30 | end |
| 40 | device for monitoring a diesel particulate filter |
| 41 | means for determining and logging at least one physical parameter |
| 42 | evaluation unit |
| 43 | exhaust aftertreatment device |
| 44 | diesel engine |
| 45 | diesel particulate filter |
| 50 | vehicle |
| t | time stamp |
| $\Delta$ | time step |

**Claims**

1. A method for monitoring a diesel particulate filter (45) positioned downstream of an engine (44) with respect to an exhaust gas flow direction, comprising the following steps:

   - determining and logging at least one physical parameter which characterises the thermodynamic properties of the exhaust gas (6),
   - estimating at least one parameter characterising the diesel particulate filter based on the at least one physical parameter using a recursive estimation logic (11), when a trigger condition (9) and at least one activation condition (8) are met,
   - counting the total estimated parameter data points and when the number of data points reaches a predetermined limit, classifying (13) the diesel particulate filter based on the estimated at least one parameter using a support vector machine logic.

2. The method as claimed in claim 1,
   **characterised in**
   filtering the logged physical parameter signals (7).

3. The method as claimed in claim 1 or claim 2,
   **characterised in that**
   estimating at least one parameter characterising the diesel particulate filter (11) comprises estimating the permeability of the diesel particulate filter.

4. The method as claimed in any of the claims 1 to 3,
   **characterised in**
   using a recursive estimation logic comprising a static Kalman filter algorithm and/or a recursive least squares algorithm.

5. The method as claimed in any of the claims 1 to 4,
   **characterised in that**
   estimating at least one parameter characterising the diesel particulate filter (11) comprises determining the average pressure difference between an upstream side and a downstream side of the diesel particulate filter and/or a differential pressure measurement bias across a diesel particulate filter wall and/or a diesel particulate filter soot load.

6. The method as claimed in any of the claims 1 to 5,
   **characterised in**

   - logging input values for a current time stamp (t);
   - filtering the raw input values;
   - if a number of predetermined activation conditions are not met, waiting for a next clock trigger $(t=t+\Delta)$ and continuing with logging input values; and if the number of predetermined activation conditions are met, checking the distribution of the filtered values using a bin logic;
- if there is no associated bin or the active bin is full, then waiting for a next clock trigger (t=t+Δ) and continuing with logging input values; if the active bin is not full, then estimating (calculating) at least one parameter characterising the diesel particulate filter, waiting for a next clock trigger (t=t+Δ) and continuing with logging input values; and if all bins are full, then evaluating the last estimated (calculated) parameters characterising the diesel particulate filter using a classifier;
- classifying the diesel particulate filter based on the classified parameters; and
- outputting a signal comprising the result of the classification.

**7.** The method as claimed in any of the claims 1 to 6, **characterised in** measuring the mass air flow by a sensor positioned at an airflow inlet pipe of the engine, reading the fuel mass flow from calibrated tables and calculating the total exhaust flow by summation of the measured mass air flow and the fuel mass flow.

**8.** The method as claimed in any of the claims 1 to 7, **characterised in that** the step of determining at least one physical parameter which characterises the thermodynamic properties of the exhaust gas (6) comprises measuring the inlet temperature and the outlet temperature and the exhaust mass flow, and estimating the temperature of the diesel particulate filter based on the inlet temperature, the outlet temperature and the exhaust mass flow using a model.

**9.** The method as claimed in any of the claims 1 to 8, **characterised in** using flow rate based bins as trigger conditions.

**10.** The method as claimed in any of the claims 1 to 9, **characterised in that** at least one predetermined activation condition (8) comprises an upper limit and/or a lower limit of an engine operation mode and/or of a volumetric flow through the diesel particulate filter and/or of a diesel particulate filter differential pressure and/or of a diesel particulate filter temperature and/or of an estimated soot load.

**11.** A device (40) for monitoring a diesel particulate filter (45), **characterised in that** it is adapted to execute a method for monitoring a diesel particulate filter (45) as claimed in any of the claims 1 to 10.

**12.** The device (40) for monitoring a diesel particulate filter as claimed in claim 11, **characterised in that** it comprises at least one means (41) for determining and logging at least one physical parameter which characterises the thermodynamic properties of the exhaust gas, and an evaluation unit (42) for estimating at least one parameter characterising the diesel particulate filter based on the at least one physical parameter using a recursive estimation logic, when the trigger conditions and at least one activation condition are met, and for counting the total estimated parameter data points and when the number of data points reaches a predetermined limit, classifying the diesel particulate filter based on the estimated at least one parameter using a support vector machine logic.

**13.** An exhaust aftertreatment device (43) comprising a diesel particulate filter (45) and a device (40) for monitoring a diesel particulate filter as claimed in claim 11 or claim 12.

**14.** A vehicle (50) comprising a diesel engine (44) and an exhaust aftertreatment device (43) as claimed in claim 13.

**15.** A computer program product comprising instructions which, when the program is executed by a computer, cause the computer to carry out a method as claimed in any of the claims 1 to 10.

**16.** A computer-readable storage medium comprising instructions which, when the program is executed by a computer, cause the computer to carry out a method as claimed in any of the claims 1 to 10.

**Fig. 1**

**Fig. 4**

**Fig. 5**

Fig. 2

Fig. 3

Europäisches
Patentamt

European
Patent Office

Office européen
des brevets

# EUROPEAN SEARCH REPORT

**Application Number**

EP 18 20 6294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | DE 10 2014 203621 A1 (MTU FRIEDRICHSHAFEN GMBH [DE]) 27 August 2015 (2015-08-27)<br>* paragraphs [0019] - [0022], [0047] - [0049]; figures 1,2 * | 1-6,8,<br>10-16<br>7,9 | INV.<br>F01N11/00<br>F01N3/021 |
| X<br><br><br>A | WO 2008/133694 A1 (MACK TRUCKS [US]; TAI CHUN [US]; KENTH I SVENSSON [US]) 6 November 2008 (2008-11-06)<br>* paragraphs [0016] - [0022]; figure 1 * | 1-5,7,8,<br>10-16<br><br>6,9 | |
| X<br><br>A | DE 10 2008 061992 A1 (HYUNDAI MOTOR CO LTD [KR]) 18 June 2009 (2009-06-18)<br>* paragraphs [0034], [0042] - [0073]; figures 1-3 * | 1-8,<br>10-16<br>9 | |
| A | DE 60 2004 023443 T2 (RENAULT SA [FR]) 28 January 2010 (2010-01-28)<br>* paragraphs [0028] - [0033]; figures 2-6 * | 1-8,<br>10-16 | |

TECHNICAL FIELDS
SEARCHED     (IPC)

F01N

The present search report has been drawn up for all claims

| Place of search | Date of completion of the search | Examiner |
|---|---|---|
| Munich | 22 February 2019 | Kolland, Ulrich |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 18 20 6294

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2019

| Patent document cited in search report | Publication date | Patent family member(s) | | Publication date |
|---|---|---|---|---|
| DE 102014203621 A1 | 27-08-2015 | CN | 106460603 A | 22-02-2017 |
| | | DE | 102014203621 A1 | 27-08-2015 |
| | | EP | 3111061 A1 | 04-01-2017 |
| | | US | 2017074146 A1 | 16-03-2017 |
| | | WO | 2015127949 A1 | 03-09-2015 |
| WO 2008133694 A1 | 06-11-2008 | EP | 2153032 A1 | 17-02-2010 |
| | | JP | 5102873 B2 | 19-12-2012 |
| | | JP | 2010526234 A | 29-07-2010 |
| | | US | 2010089041 A1 | 15-04-2010 |
| | | WO | 2008133694 A1 | 06-11-2008 |
| DE 102008061992 A1 | 18-06-2009 | CN | 101458108 A | 17-06-2009 |
| | | DE | 102008061992 A1 | 18-06-2009 |
| | | KR | 20090064104 A | 18-06-2009 |
| | | US | 2009157348 A1 | 18-06-2009 |
| DE 602004023443 T2 | 28-01-2010 | AT | 319000 T | 15-03-2006 |
| | | DE | 602004023443 T2 | 28-01-2010 |
| | | EP | 1491738 A1 | 29-12-2004 |
| | | FR | 2856731 A1 | 31-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 602004023443 T2